## Europäisches Patentamt

## European Patent Office

## Office européen des brevets

(19)

(11) Veröffentlichungsnummer: **0 131 247**

**B1**

(12)

# EUROPÄISCHE PATENTSCHRIFT

(45) Veröffentlichungstag der Patentschrift:
14.10.87

(21) Anmeldenummer: **84107745.6**

(22) Anmeldetag: **04.07.84**

(51) Int. Cl.⁴: **B 62 D 7/14, B 62 D 9/00**

(54) **Lenkmechanismus.**

(30) Priorität: **09.07.83 DE 3324862**

(43) Veröffentlichungstag der Anmeldung:
**16.01.85 Patentblatt 85/3**

(45) Bekanntmachung des Hinweises auf die Patenterteilung:
**14.10.87 Patentblatt 87/42**

(84) Benannte Vertragsstaaten:
**CH FR GB IT LI SE**

(56) Entgegenhaltungen:
**CH-A-198 026**
**DE-A-2 759 094**
**FR-A-2 217 950**
**US-A-3 110 352**
**US-A-3 903 983**
**US-A-4 105 086**

(73) Patentinhaber: **MANNESMANN Aktiengesellschaft,**
**Mannesmannufer 2, D-4000 Düsseldorf 1 (DE)**

(72) Erfinder: **Dürwald, Dierk, Dipl.- Ing.,**
**Heilkenstrasse 65a, D-5802 Wetter 2 (DE)**
Erfinder: **Cittrich, Jürgen, Steinkampstrasse 25,**
**D-5802 Wetter 2 (DE)**

EP 0 131 247 B1

LIBER, STOCKHOLM 1987

## Beschreibung

Die Erfindung betrifft einen Lenkmechanismus für ein Flurförderzeug mit Allradlenkung und mit einem die Räder miteinander verbindenden Hebelgestänge, wobei eine Längsstange auf einer Seite der Fahrzeuglängsmittellinie an einem Lenkhebel der Vorderachse angreift und zur anderen Fahrzeugseite der Hinterachse geführt ist und dort an einem Zwischenhebel angreift, der um den Schnittpunkt der Hinterachse mit der Fahrzeuglängsmittellinie drehbar und über Spurstangen und Lenkzapfen mit Spurhebeln der an den hinteren Ecken des Flurförderzeuges gelagerten Hinterräder verbunden ist, und daß die Vorder- und Hinterachse mit nach vorne und hinten gerichteten Deichseln versehen ist.

Ein derartiges Vierradfahrzeug mit Allradlenkung und nach vorne und hinten gerichteter Deichsel ist als naheliegendster Stand der Technik durch die CH-PS 198 026 bekannt. Es handelt sich um einen Anhänger, der von einer Zugmaschine gezogen wird. Würde man die Räder einer Achse über ein Differentialgetriebe mit einem gemeinsamen Antrieb versehen, dann würden unterschiedliche Fahrwiderstände, wie sie durch unterschiedliche Belastungen entstehen können, zu einem ungewollten Deichseleinschlag führen. Auch bei einzeln angetriebenen Rädern werden unterschiedliche Fahrwiderstände einen derartigen Deichseleinschlag verursachen, so daß die an der Deichsel angeordnete Signalempfangseinrichtung den Kontakt zur Leitspur verliert. Eine genaue Führung des Fahrzeuges, vor allem bei Kurvenfahrt, ist nicht gewährleistet.

Wegen der oft engen Platzverhältnisse sind beim innerbetrieblichen Transportsystem direkt hinter Kurven Übergabeplätze vorgesehen. Wenn das Fahrzeug eine Kurve nicht exakt durchfahren hat, kommt es dann an der folgenden Übergabestelle zu Betriebsstörungen, weil die Halteposition des mit einer Übergabevorrichtung ausgerüsteten Fahrzeuges nicht mit dem Beladeplatz übereinstimmt.

Aufgabe der Erfindung ist es daher, ein Fahrzeug mit Allradlenkung und Deichseln an beiden Fahrzeugenden so zu gestalten, daß es als Flurförderzeug mit geringem Aufwand gelenkt und angetrieben werden kann. Diese Aufgabe wird dadurch gelöst, daß ein Vorderrad in der Längsmittellinie des Flurförderzeuges um eine senkrechte Achse lenkbar gelagert und mit einem koaxial zur senkrechten Lenkache angeordneten Fahrmotor und einem Lenkmotor verbunden ist, und daß die Deichseln zum Boden gerichtete Signalempfangseinrichtungen haben. Die an den Deichseln angeordneten Signalempfangseinrichtungen steuern fahrerlos über den Lenkmotor die Lenkung bei Vorwärts- und Rückwartsfahrt und außerdem auch den Fahrmotor, der das in Fahrzeugmitte gelagerte lenkbare Rad antreibt. Ein Differentialgetriebe ist nicht erforderlich. Die Nutzlast wird vor allem von den beiden unter der Ladefläche angeordneten Rädern getragen, so daß ein Rad unter dem Aufbau für Antrieb und Lenkung genügt. Dieser Lenkmechanismus besteht mit Ausnahme des Zwischenhebels aus Stangen und Zapfen, wie sie bei Personenwagen millionenfach bewährt sind. Auch der Zwischenhebel ist ein einfaches Bauteil und stellt an den Hersteller und getreiber keine besonderen Anforderungen.

In weiterer Ausgestaltung der Erfindung ist der Lenkhebel der Vorderachse so lang wie ein Seitenhebel des hinteren Zwischenhebels. Die Lenkzapfen zwischen Lenkhebel und Längsstange sowie zwischen Längsstange und Seitenhebel liegen zwischen den Achsen des Fahrzeuges und in einem Winkel von ca. 75 Grad zur Fahrzeuglängsmittenachse. Die Spurhebel der Hinterräder sind von der Hinterachse nach vorne gerichtet und um ca. 10 Grad zur Fahrzeuglängsmittenachse geneigt. Bei dieser Anordnung wird die bei Personenwagen übliche Lenkgeometrie durch Bilden eines Lenktrapezes eingehalten, das den Radstand und die Spurweite der lenkbaren Räder berücksichtigt.

Eine besonders einfache Bauweise ergibt sich, wenn das Fahrzeug ein Vorderrad und zwei um einen gemeinsamen senkrechten Lenkzapfen schwenkbare Zwillings-Hinterräder hat, wobei der Lenkmotor ein Zahnrad für eine Rollenkette haben kann, die um ein mit einem Drehschemel der Vorderachse verbundenen Lenkzahnrad geführt ist.

Ein Ausführungsbeispiel der Erfindung ist in den Zeichnungen dargestellt und im folgenden erläutert. Es zeigen:

Fig. 1 schematisch die Draufsicht auf einen Lenkmechanismus,

Fig. 2 ein Fahrzeug mit Lenkmechanismus in der Draufsicht,

Fig. 3 die Seitenansicht eines Fahrzeuges nach Fig. 2.

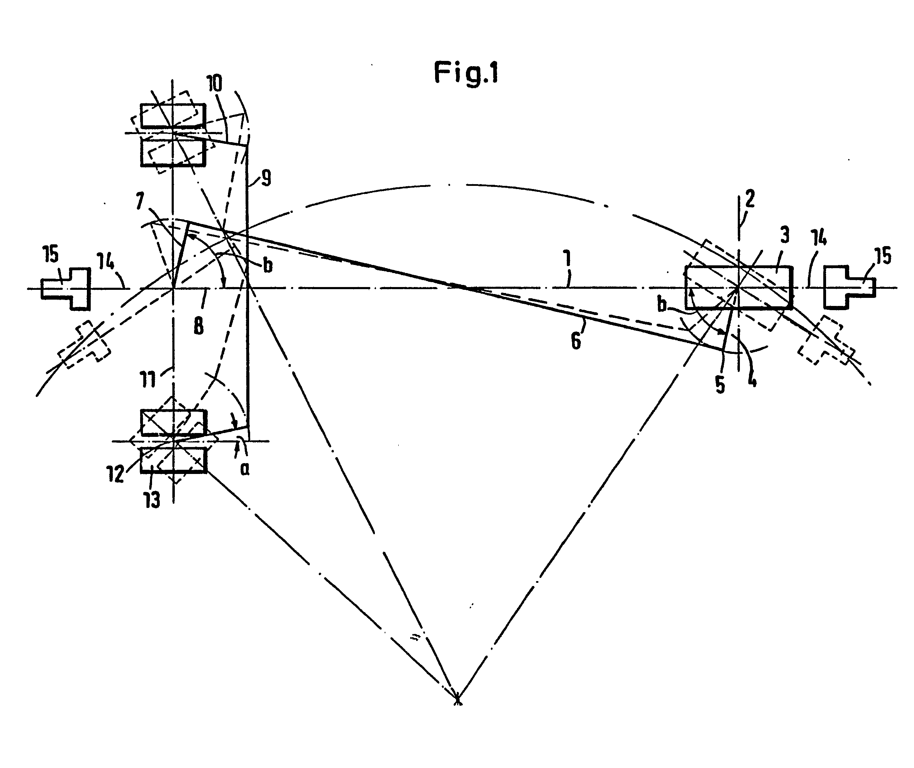

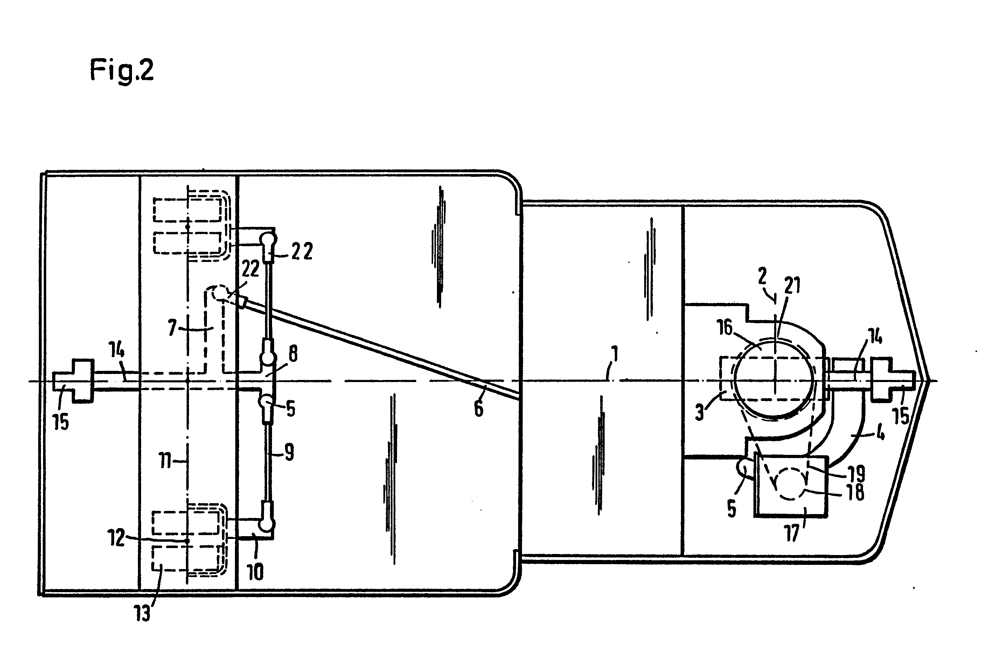

Die Fig. 1 und 2 zeigen, daß auf der Fahrzeuglängsmittellinie 1 das Vorderrad 3 um die Vorderachse 2 schwenkbar ist und über einen Lenkhebel 4 sowie einen Lenkzapfen 5 mit einer Längsstange 6 verbunden ist, die den Lenkeinschlag des mit einer Deichsel 14 mit Signalempfangseinrichtung 15 versehenen Lenkhebels 4 auf die Hinterräder 13 überträgt. Auf dem Schnittpunkt der Hinterachse 11 mit der Fahrzeuglängsmittellinie 1 ist ein Zwischenhebel verschwenkbar gelagert, an dessen Seitenhebel 7 die Längsstange 6 angelenkt ist. Der Zwischenhebel 8 hat auf beiden Seiten der Fahrzeuglängsmittellinie 1 je einen Lenkzapfen 5 für Spurstangen 9, die über weitere Lenkzapfen mit Spurhebeln 10 der um senkrechte Lenkzapfen 12 verschwenkbaren Hinterräder 13 verbunden sind. Diese sind als Zwillings-Räder ausgebildet und um den zwischen ihnen liegenden Lenkzapfen 12 zum Bilden eines Lenkeinschlages verschwenkbar. Auch der Zwischenhebel 8 hat eine Deichsel 14 mit einer Signalempfangseinrichtung 15.

Zum genauen Einstellen der Spurhebel 10 auf den Winkel a sind die Spurstangen 9 mit einer Nachstellvorrichtung 22 versehen. Die Längsstange 6 ist zum Einstellen des Winkels b zwischen der Fahrzeuglängsmittellinie 1 und den Anschlußstellen zum Lenkhebel 4 bzw. Seitenhebel 7 ebenfalls mit einer Nachstellvorrichtung 22 ausgerüstet.

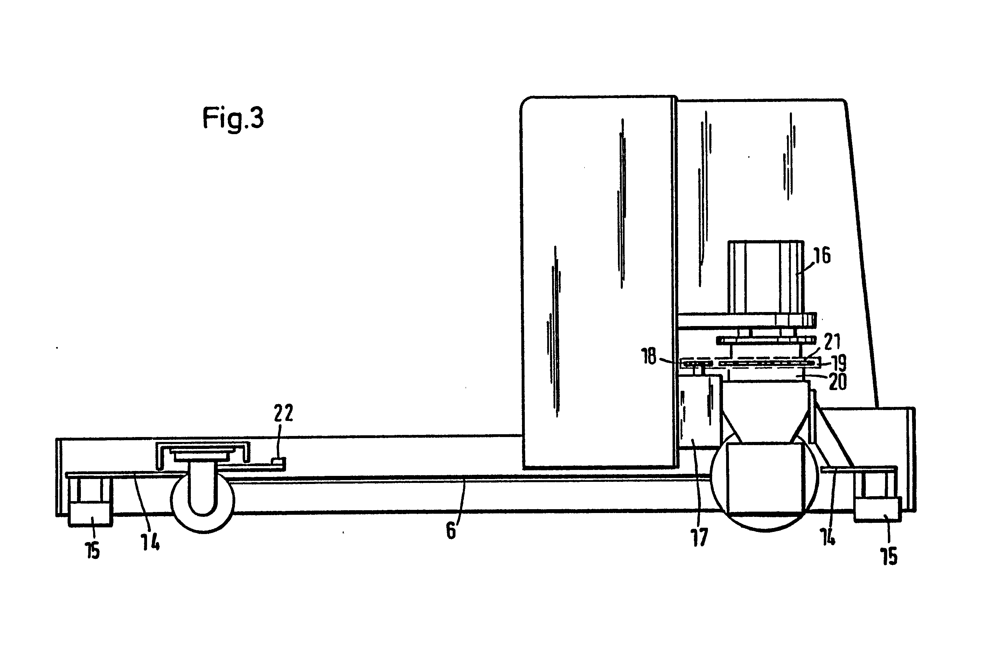

Die Fig. 2 und 3 zeigen die Anordnung des Fahrmotors 16 mit der Verbindung zum Vorderrad 2 sowie den Lenkmotor 17 mit seinem Zahnrad 18 für eine Rollenkette 19 zum Drehen des Drehschemels 20 über sein Lenkzahnrad 21.

## Patentansprüche

1. Lenkmechanismus für ein Flurförderzeug mit Allradlenkung und mit einem die Räder miteinander verbindenden Hebelgestange, wobei eine Längsstange (6) auf einer Seite der Fahrzeuglängsmittellinie an einem Lenkhebel (4) der Vorderachse angreift und zur anderen Fahrzeugseite der Hinterachse geführt ist und dort an einem Zwischenhebel (8) angreift, der um den Schnittpunkt der Hinterachse mit der Fahrzeuglängsmittellinie drehbar ist und über Spurstangen (10) und Lenkzapfen mit Spurhebeln der an den hinteren Ecken des Flurförderzeuges gelagerten Hinterräder verbunden ist, und daß die Vorder- und Hinterachse mit nach vorne und hinten gerichteten Deichseln (14) versehen ist, dadurch gekennzeichnet, daß ein Vorderrad (3) im der Längsmittellinie (1) des Flurförderzeuges um eine senkrechte Achse lenkbar gelagert und mit einem koaxial zur senkrechten Lenkachse angeordneten Fahrmotor (16) und einem Lenkmotor (17) verbunden ist, und daß die Deichseln (14) zum Boden gerichtete Signalempfangseinrichtungen (15) haben.

2. Lenkmechanismus nach Anspruch 1, dadurch gekennzeichnet, daß der Lenkhebel (4) der Vorderachse (2) so lang ist wie ein Seitenhebel (7) des hinteren Zwischenhebels (8), und daß der Lenkzapfen (5) des vorderen Lenkhebels (4) und der des hinteren Seitenhebels (7) zur Verbindung mit der Längsstange (6) von den Achsen (2, 11) im Winkel von ca. 75° zur Fahrzeuglängsmittellinie (1) liegen.

3. Lenkmechanismus nach Anspruch 1, dadurch gekennzeichnet, daß das Fahrzeug ein Vorderrad (3) und zwei um einen gemeinsamen senkrechten Lenkzapfen (12) schwenkbare Zwillings-Hinterräder (13) hat.

4. Lenkmechanismus nach Anspruch 3, dadurch gekennzeichnet, daß der Lenkmotor (17) ein Zahnrad (18) für eine Rollenkette (19) hat, die um ein mit einem Drehschemel (20) der Vorderachsen (2) verbundenen Lenkzahnrad (21) geführt ist.

## Claims

1. STEERING MECHANISM for floor-riding transport vehicle with wheels individually steerable via an interconnecting linkage, a longitudinal link rod (6) at one side of the vehicle's longitudinal center line engaging the front axle at a steering lever (4) and continuing to the other side of the vehicle, there to engage an intermediate lever (8) slewable around the point of intersection between the vehicle's rear axle and longitudinal center line and linked via steering tie rods (10) and steering pivots with track rod arms to the rear corners of the vehicle where the rear wheels are carried, front and rear axles featuring draw bars (14) extending to the front and to the rear, characterized by: a front wheel (3) being steerably suspended in the longitudinal center line (1) of the vehicle, in coaxial arrangement relative to the vertical steering axle and slewable around same, having a travel motor (16) and a directional motor (17), the draw bars (14) featuring downward directed signal pick-ups (15).

2. STEERING MECHANISM, to Claim 1, characterized by: the steering lever (4) of the front axle (2) being equal in length to a lateral arm (7) of the rear intermediate lever (8), the steeering pivot (5) of the front steering lever (4) and the rear lateral arm (7) connecting the longitudinal link rods (6) of the axles (2, 11) at an angle of about 75 degrees to the vehicle's longitudinal center line (1).

3. STEERING MECHANISM, to Claim 1, characterized by: the vehicle's having a front wheel (3) and two twin rear wheels (13) slewably mounted at a vertical steering pivot (12).

4. STEERING MECHANISM, to Claim 3, characterized by: the directional motor (17) featuring a gear wheel (18) for a roller chain (19) engaging the circumference of a steering geer wheel (21) connected to a bogie (20) at the front exle (2).

## Revendications

1. Mécanisme de direction pour un chariot de manutention avec une direction à roues complètement articulées et avec une tringlerie reliant les roues entre elles, une barre longitudinale (6) située sur un côté de la ligne médiane longitudinale du véhicule saisissant un levier de direction (4) de l'essieu avant et amené sur l'essieu arrière situé de l'autre côté du vehicule et saisissant là un levier intermédiaire (8) qui pivote autour du point d'intersection entre l'essieu arrière et la ligne médiane longitudunale du véhicule et relié par des barres d'accouplement (10) et des pivots de direction avec des leviers d'accouplement des roues arrière placées aux coins arrière du chariot de manutention, l'essieu avant et l'essieu arrière étant pourvus de timons (14) orientés vers l'avant et vers l'arrière, caractérisé en ce qu'une roue avant (3) située dans la ligne médiane longitudinale (1) du chariot de manutention est montée pivotante autour d'un axe vertical et relié avec un moteur de propulsion (16) et un moteur de direction (17) disposés coaxialememt avec l'axe de direction vertical et en ce que les timons (14) possèdent des dispositifs de réception de signaux (15) tournés vers le sol.

2. Mécanisme de direction selon la revendication 1, caractérisé en ce que le levier de direction (4) de l'essieu avant (2) est aussi long qu'un levier latéral (7) du levier intermédiaire (8) arrière, et que le pivot de direction (5) du levier de direction (4) avant et celui du levier latéral (7) arrière sont situés avec un angle d'environ 75° depuis les axes (2, 11) jusqu'à la ligne médiane longitudinale du véhicule, pour la liaison avec la barre longitudinale (6).

3. Mécanisme de direction selon la revendication 1, caractérisé en ce que le véhicule possède une roue avant (3) et deux roues arrière jumelées (13) pivotantes autour d'un pivot de direction vertical commun (12).

4. Mécanisme de direction selon la revendication 3, caractérisé en ce que le moteur de direction (17) possède une roue dentée (18) pour une chaîne à rouleaux (19), qui est actionnée autour d'une roue dentée de direction (21) liée avec un timon tournant (20) de l'essieu avant (2).

# Fig.1

0 131 247

Fig.2

Fig.3

0 131 247